# FASCICULE DE BREVET EUROPEEN

(11) **EP 3 006 599 B1**
(45) Date de publication et mention de la délivrance du brevet: **27.03.2019**
(21) Numéro de dépôt: 15188934.2
(22) Date de dépôt: 08.10.2015
(51) Int. Cl.: C23C 18/12, C09D 5/16, C09D 5/00

(54) **PROCÉDÉ DE REVÊTEMENT DE LA SURFACE D'UN SUBSTRAT MÉTALLIQUE**
BESCHICHTUNGSVERFAHREN DER OBERFLÄCHE EINES METALLSUBSTRATS
METHOD FOR COATING THE SURFACE OF A METAL SUBSTRATE

(30) Priorité: 10.10.2014 FR 1459762
(43) Date de publication de la demande: 13.04.2016
(73) Titulaire: Safran Landing Systems, 78140 Vélizy-Villacoublay (FR); RBnano, 67200 Strasbourg (FR)
(72) Inventeur: ESTEBAN, Julien, 67000 STRASBOURG (FR); ROLAND MAFOUANA, Rodrigue, 67200 STRASBOURG (FR); REHSPRINGER, Jean-Luc, 67380 LINGOLSHEIM (FR)
(74) Mandataire: Laïk, Eric

(56) Documents cités:
- DE-A1-102011 078 066
- GB-A- 2 499 847
- US-B1- 6 605 365
- Theodor Schneller ET AL: "Carboxylate Based Precursor Systems" In: "Chemical Solution Deposition of Functional Oxide Thin Films", 1 janvier 2013 (2013-01-01), Springer Vienna, Vienna, XP055195717, ISBN: 978-3-21-199311-8 pages 29-49, DOI: 10.1007/978-3-211-99311-8_2, * page 38, lignes 1-15 *

## Description

### Arrière-plan de l'invention

L'invention concerne des procédés de revêtement de la surface de substrats métalliques.

Il est connu de réaliser des pré-traitements chimiques ou mécaniques avant certains traitements de surface de substrats métalliques. Ces pré-traitements peuvent permettre d'assurer une bonne cohésion entre le substrat et le dépôt de matière formé lors du traitement de surface, le dépôt de matière étant par exemple constitué par une couche de peinture, de vernis ou une couche formée par voie sol-gel. Les pré-traitements peuvent encore conférer aux éléments présents à la surface du substrat une bonne réactivité lors de la réalisation de traitements chimiques ou électro-chimiques (par exemple de conversion chimique, d'oxydation anodique ou de dépôt chimique statique).

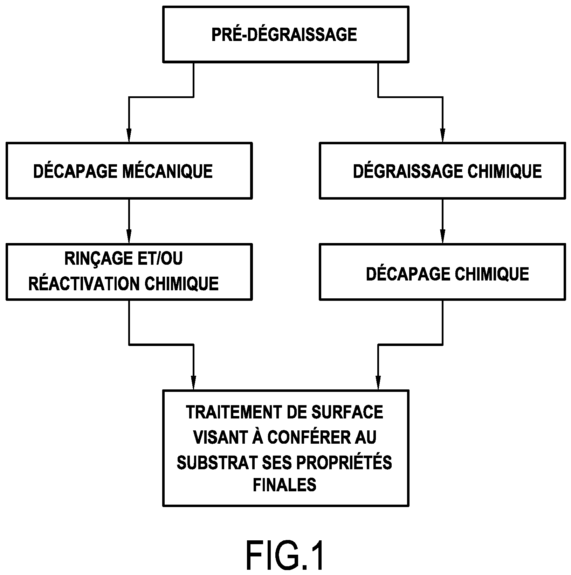

La figure 1 illustre des exemples de pré-traitements connus de l'état de la technique. Toutefois, ces pré-traitements peuvent être relativement longs à mettre en oeuvre et peuvent rendre relativement complexes les procédés de revêtement de substrats métalliques connus.

On connaît US 6 605 365 qui divulgue des traitements de surface de substrats métalliques.

Il existe, par conséquent, un besoin pour obtenir des procédés de revêtement de substrats métalliques simples et peu coûteux à mettre en oeuvre tout en permettant d'assurer une très bonne adhésion du revêtement formé au substrat métallique sous-jacent.

### Objet et résumé de l'invention

L'invention propose, selon un premier aspect, un procédé selon la revendication 1.

Le brevet décrit encore un procédé de revêtement de la surface d'un substrat métallique comportant les étapes suivantes :
a) application sur la surface d'un substrat métallique d'une première composition comportant dans un milieu liquide des précurseurs sol-gel de type métallo-organique, lesdits précurseurs sol-gel étant aptes à se lier avec le substrat métallique,
b) soumission de la première composition à un premier traitement thermique de manière à former une couche d'ancrage sur le substrat métallique dans laquelle les précurseurs sol-gel sont liés au substrat métallique, une première température étant imposée durant le premier traitement thermique laquelle est suffisante pour éliminer tout ou partie du milieu liquide et favoriser la liaison des précurseurs sol-gel au substrat métallique, le premier traitement thermique étant configuré pour éviter une condensation complète des précurseurs sol-gel entre eux,
c) application sur la couche d'ancrage d'une deuxième composition comportant des composés de revêtement de manière à obtenir un revêtement sur la couche d'ancrage par formation de liaisons entre les précurseurs sol-gel et les composés de revêtement.

Les précurseurs sol-gel appliqués lors de l'étape a) peuvent avoir la même nature chimique. En variante, ils peuvent avoir des natures chimiques différentes (i.e. un mélange de précurseurs sol-gel différents peut être appliqué).

Les composés de revêtement appliqués lors de l'étape c) peuvent avoir la même nature chimique. En variante, ils peuvent avoir des natures chimiques différentes (i.e. un mélange de composés de revêtement différents peut être appliqué).

Dans un exemple de réalisation, le substrat métallique comporte de l'aluminium.

Le substrat traité lors de l'étape a) peut ou non présenter une couche d'oxydation à sa surface. Ainsi, dans un exemple de réalisation, les précurseurs sol-gel peuvent, lors de l'étape a), être appliqués sur cette couche d'oxydation du substrat. En variante, le substrat métallique n'est pas oxydé en surface et les précurseurs sol-gel sont appliqués lors de l'étape a) sur le substrat métallique à l'état non oxydé.

Le premier traitement thermique réalisé lors de l'étape b) permet d'évaporer tout ou partie du milieu liquide, ce qui peut permettre d'améliorer encore la liaison des précurseurs sol-gel au substrat métallique afin d'améliorer l'adhésion de la couche d'ancrage au dit substrat. Les liaisons entre les précurseurs sol-gel présents dans la couche d'ancrage et le substrat métallique peuvent être de toute sorte, par exemple être des liaisons covalentes, des liaisons hydrogènes ou des liaisons ioniques. En outre, en évitant la condensation complète des précurseurs sol-gel, l'étape b) permet aux précurseurs sol-gel de conserver des groupements -OH (par exemple des groupements alcool ou acide carboxylique, éventuellement sous forme alcoolate ou carboxylate) et/ou -O-Alk, Alk désignant un alkyle, reliés à un atome de silicium ou de métal. Ces groupements sont comme expliqué plus bas utile pour assurer la liaison des précurseurs sol-gel aux composés de revêtement.

Les composés de revêtement comportent une ou plusieurs fonctions chimiques (dites fonctions de fixation) aptes à former une liaison avec les groupements -OH et/ou -O-Alk résiduels des précurseurs sol-gel. Ces fonctions de fixation peuvent, par exemple, être choisies parmi les groupements -OH et/ou -O-Alk', Alk' désignant un alkyle différent ou identique du groupement Alk, par exemple reliés à un atome de silicium ou de métal ou à une chaine carbonée laquelle peut comporter une ou plusieurs fonctions polymérisables comme des fonctions epoxy ou acrylate, ou parmi les groupements halogénures d'alkyle, par exemple chlorures d'alkyles.

L'étape c) permet d'obtenir une interaction entre les groupements -OH et/ou -O-Alk résiduels des précurseurs sol-gel ancrés au substrat métallique et les fonctions de fixation, par exemple les groupements -OH et/ou -O-Alk', des composés de revêtement et ainsi d'obtenir une bonne adhésion du revêtement à la couche d'ancrage et, par conséquent, au substrat métallique. En particulier, cette interaction peut avantageusement résulter en la formation de liaisons covalentes entre les composés de revêtement et les précurseurs sol-gel. L'interaction entre les groupements -OH et/ou -O-Alk des précurseurs sol-gel et les fonctions de fixation des composés de revêtement peut encore résulter en la formation d'autres types de liaisons comme, par exemple, des liaisons hydrogène et/ou des liaisons ioniques.

L'invention permet avantageusement de fonctionnaliser de manière simple, rapide et peu coûteuse la surface d'un substrat métallique par l'intermédiaire de la couche d'ancrage et d'obtenir un revêtement déposé sur cette couche d'ancrage présentant une très bonne adhérence au substrat métallique. L'invention permet avantageusement de s'affranchir des étapes illustrées à la figure 1 réalisées entre le pré-dégraissage et le traitement visant à conférer au substrat ses propriétés finales. L'invention permet ainsi de disposer d'un procédé dans lequel l'étape de pré-traitement du substrat métallique (formation de la couche d'ancrage) est particulièrement simple à réaliser. En particulier, le procédé peut avantageusement être tel qu'aucune étape de décapage de la surface du substrat métallique n'est réalisée avant l'étape a).

Il peut être avantageux d'employer en outre des types de précurseurs sol-gel (alcoxysilane ou métallo-organique) selon la composition du substrat métallique traité. Spécialement dans le cas où le métal du substrat métallique n'est pas revêtu d'une couche d'oxydation, l'utilisation des précurseurs sol-gel de type métallo-organique est préférable.

Sauf mention contraire, les expressions « précurseurs sol-gel de type alcoxysilane » et « précurseurs sol-gel de type métallo-organique » désignent les formes non hydrolysée ou au moins partiellement hydrolysée de ces précurseurs. Ainsi, comme il sera détaillé plus bas, l'invention couvre à la fois les cas où les précurseurs sol-gel sont appliqués lors de l'étape a) sur le substrat métallique sous forme non hydrolysée, sous forme partiellement hydrolysée et sous forme intégralement hydrolysée.

Le brevet décrit encore que les précurseurs sol-gel puissent comporter des précurseurs sol-gel de type alcoxysilane.

Les précurseurs sol-gel de type alcoxysilane, lorsqu'il sont à l'état non hydrolysé et à l'état monomère, présentent la formule générale suivante : AₘSi(OR)ₙX₄₋ₙ₋ₘ où :
- R est un groupement alkyle, et, lorsqu'il y a plusieurs groupements R, chaque groupement R est un groupement alkyle et les groupements R peuvent être identiques ou différents,
- A est une fonction organique ligante apte à former une liaison avec le substrat métallique, la fonction organique ligante peut de préférence comporter un groupement ligand A' choisi parmi les groupements alcoxyle, amine, acryloxy, méthacryloxy, diméthyl phosphate, diéthyl phosphate, époxy ou vinyle, et, lorsqu'il y a plusieurs fonctions A, chaque groupement A' peut être tel que défini ci-avant et les groupements A' peuvent être identiques ou différents, le(s) groupement(s) ligand(s) A' peut (peuvent) éventuellement être relié(s) au silicium par l'intermédiaire d'un groupement alkyle R',

- X est un groupement relié au silicium, X peut être de toute sorte par exemple être un atome d'hydrogène, une chaîne hydrocarbonée comportant de 1 à 30 atomes de carbone, saturée ou insaturée, interrompue ou non par un ou plusieurs hétéroatomes, non substituée ou substituée, ou un atome d'halogène et, lorsqu'il y a plusieurs groupements X, les groupements X peuvent être identiques ou différents, et
- n est un entier compris entre 1 et 3,
- m est un entier compris entre 1 et 3.

Lorsque les précurseurs de type alcoxysilane sont sous forme au moins partiellement hydrolysée, il faut comprendre que tout ou partie des groupements alcoxyles reliés au silicium (groupements -OR ci-dessus) desdits précurseurs sont hydrolysés pour former des groupements silanols (Si-OH). Lorsque les précurseurs de type alcoxysilane sont sous forme complètement hydrolysée, il faut comprendre que l'intégralité des groupements alcoxyles reliés au silicium desdits précurseurs sont hydrolysés pour former des groupements silanols.

Le brevet décrit encore que les précurseurs sol-gel de type alcoxysilane puissent, lors de l'étape a), être à l'état monomère ou oligomère. L'état oligomère correspond à un état dans lequel des atomes de silicium sont liés par au moins un pont oxo- (-Si-O-Si-) obtenu suite à une réaction de condensation. Dans ce cas, les précurseurs présentent des motifs -Si-O-Si-. Lorsque ces précurseurs sont à l'état oligomère, la condensation est suffisamment limitée pour que les précurseurs ne précipitent pas et conservent toujours après l'étape b) des groupements - OH et/ou -O-Alk résiduels comme expliqué plus haut.

La fonction organique ligante des précurseurs de type alcoxysilane interagit avec le substrat métallique afin d'assurer un bon ancrage de la couche d'ancrage au substrat métallique.

Le brevet décrit encore que les précurseurs sol-gel de type alcoxysilane puissent chacun avoir au moins une fonction organique ligante apte à se lier au substrat métallique, la fonction organique ligante pouvant comporter l'un au moins des groupements ligands suivants : alcoxyle, amine, acryloxy, méthacryloxy, diméthyl phosphate, diéthyl phosphate, époxy et vinyle, de préférence amine, acryloxy et méthacryloxy.

Le choix de précurseurs sol-gel de type alcoxysilane comportant chacun un groupement ligand de type amine, acryloxy ou méthacryloxy peut être particulièrement avantageux lorsque le substrat métallique comporte de l'aluminium.

Le brevet décrit encore que les précurseurs sol-gel appliqués lors de l'étape a) puissent être choisis parmi les composés suivants : (methacryloxymethyl)methyldimethoxysilane (CAS 121177-93-3), (methacryloxymethyl)methyldiethoxysilane (CAS 3978-58-3), (methacryloxymethyl)dimethylmethoxysilane (CAS 130771-16-3), diethylphosphatoethylmethyldiethoxysilane (CAS 18048-06-1), 3-aminopropyltriethoxysilane (CAS 919-30-2), methacryloxypropyltriisopropoxysilane (CAS 80750-05-6), m-aminophenyltrimethoxysilane (CAS 70411-42-6), methacryloxypropyltriethoxysilane (CAS 21142-29-0), N-(2-Aminoethyl)-3-aminopropyltrimethoxysilane, 3-methacryloxypropyltrimethoxysilane (CAS 2530-85-0), acetoxypropyltrimethoxysilane (CAS 59004-18-1), p-aminophenyltrimethoxysilane (CAS 33976-43-1), 3-(acryloxypropyl)trimethoxysilane (CAS 4369-14-6), diethylphosphatoethyltriethoxysilane (CAS 757-44-8), 3-mercaptopropyltriethoxysilane (CAS 14814-09-6), 3-aminopropylmethyldiethoxysilane (CAS 3179-76-8), 3-mercaptopropyltrimethoxysilane (CAS 4420-74-0), carboxyethylsilanetriol sous forme de sel de sodium (CAS 18191-40-7), 3-mercaptopropylmethyldimethoxysilane (CAS 31001-77-1), 4-aminobutyltriethoxysilane (CAS 3069-30-5), et leurs mélanges.

Le brevet décrit encore que les précurseurs sol-gel de type alcoxysilane puissent comporter du méthacryloxypropyltriméthoxysilane (MAPTMS) et/ou du (3-aminopropyl)-triéthoxysilane (APTES).

Le brevet décrit encore que tous les précurseurs sol-gel appliqués puissent être du MAPTMS. Le brevet décrit encore que tous les précurseurs sol-gel appliqués puissent être de l'APTES.

Les précurseurs sol-gel comportent des précurseurs sol-gel de type métallo-organique tels que définis à la revendication 1.

Le brevet décrit encore que les précurseurs sol-gel de type métallo-organique, lorsqu'ils sont à l'état non hydrolysé et à l'état monomère, puissent présenter la formule générale suivante : Me(OOCR")ₙ, où :
- Me est le fer,
- R" est un groupement alkyle, et, lorsqu'il y a plusieurs groupements R", chaque groupement R" est un groupement alkyle et les groupements R" peuvent être identiques ou différents, CR" peut être une chaîne carbonée comportant entre 1 et 5 atomes de carbone et comportant de préférence au moins 3 atomes de carbone,
- -n'est un entier et est égale à la valence du fer.

Lorsque les précurseurs de type métallo-organique sont sous forme au moins partiellement hydrolysée, il faut comprendre que tout ou partie des groupements -OOCR" reliés au métal desdits précurseurs sont remplacés par des groupements -OH reliés au métal. Lorsque les précurseurs de type métallo-organique sont sous forme complètement hydrolysée, il faut comprendre que l'intégralité des groupements -OOCR" reliés au métal desdits précurseurs sont remplacés par des groupements - OH reliés au métal.

En outre, les précurseurs sol-gel de type métallo-organique peuvent, lors de l'étape a), être à l'état monomère, c'est-à-dire être dans un état non polymérisé. Dans ce cas, ils ne présentent pas de motif -Me-O-Me-. Il est possible que les précurseurs sol-gel de type métallo-organique appliqués soient regroupés en nodules, cela peut être le cas si lesdits précurseurs présentent des chaînes carbonées longues lesquelles peuvent se regrouper pour des raisons d'affinité lipophile afin de former des nodules de quelques molécules de précurseurs.

Les précurseurs sol-gel de type métallo-organique comportent du fer. De préférence, les précurseurs sol-gel de type métallo-organique comportent du propionate de fer. Le brevet décrit encore que les précurseurs sol-gel de type métallo-organique puissent comporter d'autres métaux, comme du chrome, du nickel, du cobalt, du cuivre ou du zinc.

Dans un exemple de réalisation, tous les précurseurs sol-gel appliqués peuvent être du propionate de fer.

Dans un exemple de réalisation, les précurseurs sol-gel appliqués lors de l'étape a) peuvent être sous forme au moins partiellement hydrolysée. En variante, les précurseurs sol-gel peuvent être appliqués sous une forme non hydrolysée lors de l'étape a).

Il peut être avantageux d'appliquer les précurseurs sol-gel sous une forme au moins partiellement hydrolysée lors de l'étape a) dans la mesure où les groupements -OH reliés au silicium ou au métal desdits précurseurs peuvent très facilement (sans apport thermique ou avec un apport thermique limité) interagir avec les fonctions de fixation des composés de revêtement et peuvent très facilement permettre la formation de liaisons entre les composés de revêtement et les précurseurs sol-gel.

De préférence, les composés de revêtement et/ou les précurseurs sol-gel peuvent comporter, avant l'étape c), des groupements -OH.

Une telle configuration conduit avantageusement à une interaction facilitée entre les composés de revêtement et les précurseurs sol-gel.

Dans un exemple de réalisation, les composés de revêtement peuvent être choisis parmi les composés suivants : (methacryloxymethyl)methyldimethoxysilane (CAS 121177-93-3), (methacryloxymethyl)methyldiethoxysilane (CAS 3978-58-3), (methacryloxymethyl)dimethylmethoxysilane (CAS 130771-16-3), diethylphosphatoethylmethyldiethoxysilane (CAS 18048-06-1), 3-aminopropyltriethoxysilane (CAS 919-30-2), methacryloxypropyltriisopropoxysilane (CAS 80750-05-6), m-aminophenyltrimethoxysilane (CAS 70411-42-6), 3-(acryloxypropyl)tris(trimethylsiloxy)silane (CAS 17096-12-7), methacryloxypropyltriethoxysilane (CAS 21142-29-0), N-(2-Aminoethyl)-3-aminopropyltrimethoxysilane, 2-(Acryloxyethoxy)trimethylsilane (CAS 18269-99-3), 3-methacryloxypropyltrimethoxysilane (CAS 2530-85-0), acetoxypropyltrimethoxysilane (CAS 59004-18-1), p-aminophenyltrimethoxysilane (CAS 33976-43-1), 3-(acryloxypropyl)trimethoxysilane (CAS 4369-14-6), diethylphosphatoethyltriethoxysilane (CAS 757-44-8), 3-(acryloxypropyl)trichlorosilane (CAS 38595-89-0), 3-mercaptopropyltriethoxysilane (CAS 14814-09-6), 3-(acryloxypropyl)methyldichlorosilane (CAS 71550-63-5), 3-aminopropylmethyldiethoxysilane (CAS 3179-76-8), 3-mercaptopropyltrimethoxysilane (CAS 4420-74-0), carboxyethylsilanetriol sous forme de sel de sodium (CAS 18191-40-7), 3-mercaptopropylmethyldimethoxysilane (CAS 31001-77-1), 4-aminobutyltriethoxysilane (CAS 3069-30-5), methacryloxyethoxytrimethylsilane (CAS 17407-09-9), et leurs mélanges.

Les composés de revêtement peuvent lorsqu'ils sont appliqués sur la couche d'ancrage être formulés dans un milieu liquide choisi parmi le 1-propanol, le n-propanol, le 2-butanol, le n-butanol, les alcools amyliques, les esters de ces alcools, et leurs mélanges.

Dans un exemple de réalisation, un deuxième traitement thermique peut être réalisé après l'application de la deuxième composition sur la couche d'ancrage.

Le deuxième traitement thermique peut être réalisé à une température suffisante pour favoriser la formation de liaisons entre les précurseurs sol-gel et les composés de revêtement. Ainsi, la mise en oeuvre d'un tel deuxième traitement thermique est avantageuse notamment lorsque les composés de revêtement et/ou les précurseurs sol-gel comportent des groupements -O-Alk ou -O-Alk' afin de favoriser la formation de liaisons covalentes entre les composés de revêtement et les précurseurs sol-gel de la couche d'ancrage. Toutefois, lorsque les composés de revêtement et les précurseurs sol-gel comportent de nombreuses fonctions -OH, il est possible d'obtenir une bonne adhésion du revêtement à la couche d'ancrage à température ambiante sans effectuer ce deuxième traitement thermique. Il n'est donc pas nécessaire de réaliser ce deuxième traitement thermique. Il peut en effet être suffisant pour obtenir une bonne adhésion entre le revêtement et la couche d'ancrage de laisser suffisamment de temps aux composés de revêtement et aux précurseurs sol-gel afin qu'ils forment des liaisons entre eux à une température ambiante (20°C).

En alternative ou en combinaison, la mise en oeuvre du deuxième traitement thermique peut avantageusement permettre d'améliorer la dureté de la couche d'ancrage et/ou du revêtement. Dans ce cas, le deuxième traitement thermique est réalisé à une température suffisante pour condenser les précurseurs sol-gel de la couche d'ancrage entre eux et/ou les composés de revêtement entre eux. Dans ce cas, les composés de revêtement peuvent être des précurseurs sol-gel à base par exemple d'epoxy-silanes au moins partiellement hydrolysés et le deuxième traitement thermique peut permettre de condenser ces composés de revêtement entre eux.

Ainsi, dans un exemple de réalisation, les précurseurs sol-gel de la couche d'ancrage et les composés de revêtement peuvent former entre eux des liaisons à température ambiante puis le deuxième traitement thermique peut être réalisé afin de condenser les précurseurs sol-gel entre eux et/ou les composés de revêtement entre eux dans l'hypothèse où ils comporteraient encore des groupements condensables (-OH et/ou -O-Alk et/ou -O-Alk') afin de former des motifs-Me-O-Me-.

En variante, le deuxième traitement thermique peut être réalisé après l'application de la deuxième composition sur la couche d'ancrage afin à la fois de favoriser la formation de liaisons entre les précurseurs sol-gel et les composés de revêtement et de condenser les précurseurs sol-gel entre eux et/ou les composés de revêtement entre eux.

Dans un exemple de réalisation, le procédé peut, en outre, comporter, avant l'étape a), une étape a') de traitement de la surface du substrat métallique telle que traitement au plasma air ou oxygène. Cette étape permet de parfaitement dégraisser la surface métallique, d'éliminer des résidus organiques provenant d'un blister de protection ou d'éliminer des résidus de graisse de protection ou de lubrifiant incrustés dans les rainures provenant des passes d'outils de découpe ou de façonnage.

Dans un exemple de réalisation, le revêtement obtenu peut constituer une couche de peinture. Dans un exemple de réalisation, le revêtement peut être obtenu par un procédé sol-gel, lorsque les composés de revêtement constituent des précurseurs sol-gel.

### Brève description des dessins

- la figure 1 représente une succession d'étapes connue permettant de traiter la surface d'un substrat métallique,
- la figure 2 représente un schéma-blocs montrant la succession d'étapes d'un exemple de procédé selon l'invention,
- les figures 3A à 3D représentent, de manière très schématique et partielle, l'évolution obtenue suite à la mise en oeuvre de différentes étapes d'un procédé selon l'invention, et
- la figure 4 (hors invention) représente la liaison de précurseurs sol-gel de la couche d'ancrage au substrat métallique sous-jacent.

### Description détaillée de modes de réalisation

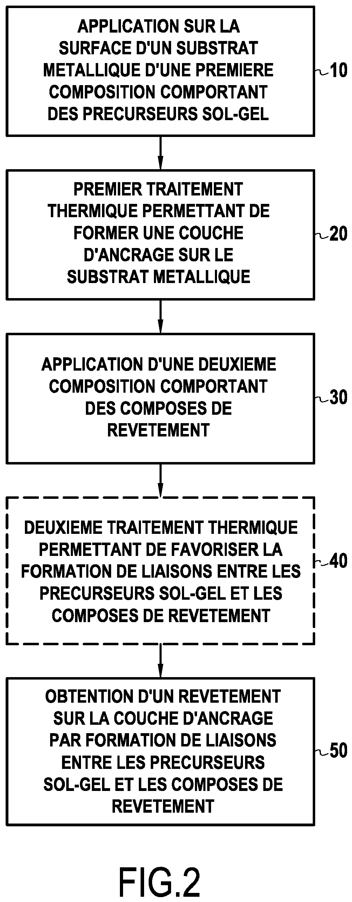

On a représenté à la figure 2 un schéma-blocs illustrant une succession d'étapes pouvant être mise en oeuvre dans le cadre de la présente invention. Les étapes encadrées en pointillés sont optionnelles.

Dans un premier temps, une première composition liquide est appliquée sur la surface d'un substrat comportant par exemple de l'aluminium (étape 10). Le substrat traité peut par exemple comporter un alliage d'aluminium, par exemple un alliage d'aluminium et de cuivre (alliage d'aluminium de la série 2000) ou un alliage d'aluminium et de zinc (alliage d'aluminium de la série 7000). En variante, le substrat comporte un acier.

Dans un exemple de réalisation, le substrat traité peut être un alliage d'aluminium anodisé, par exemple destiné à être utilisé dans une application freinage dans le domaine aéronautique. Le substrat peut ainsi être destiné à constituer une roue ou un moyen d'application de l'effort de presse tel qu'une couronne hydraulique. De façon plus générale, le substrat traité peut être destiné à constituer un carter ou une pièce primaire de cellule d'avion.

Comme mentionné plus haut, la première composition comporte des précurseurs sol-gel de type métallo-organique. La première composition peut avantageusement comporter un unique type de précurseur sol-gel métallo-organique destiné à ne pas être complètement condensé suite à l'étape b).

Le brevet décrit encore le cas où la première composition comporte des précurseurs sol-gel de type alcoxysilane, auquel cas le solvant peut par exemple être un alcool. En particulier, lorsque l'on utilise de l'APTES, le solvant peut comporter de l'éthanol et, lorsque l'on utilise du MAPTMS, le solvant peut comporter de l'iso-propanol.

Plus généralement, les précurseurs sol-gel de type alcoxysilane peuvent être dissous dans un solvant léger tel que l'éthanol, l'iso-propanol, le n-propanol, le 1-butanol, le 2-butanol, le 2-methyl-2-propanol, l'acide acétique, l'acide propionique, l'acide butanoique, l'acétate d'éthyle, l'acétate de propyle et leurs mélanges. Les précurseurs sol-gel de type alcoxysilane peuvent être dissous dans un solvant polaire différent de l'eau et présentant une tension de vapeur élevée supérieure ou égale à 4 millibars à 20°C, par exemple comprise entre 4 millibars et 30 millibars à 20°C. Comme expliqué plus haut, les précurseurs sol-gel de type alcoxysilane peuvent, au moment de leur application sur la surface du substrat métallique, être sous forme au moins partiellement hydrolysée, par exemple suite à l'ajout d'eau acide.

Les précurseurs sol-gel de type alcoxysilane peuvent être présents dans la première composition en une teneur massique supérieure ou égale à 4g/L, par exemple supérieure ou égale à 20g/L. Les précurseurs sol-gel de type alcoxysilane peuvent, par exemple, être présent dans la première composition en une teneur massique par exemple comprise entre 4g/L et 40g/L.

Les précurseurs sol-gel de type métallo-organique peuvent être dissous dans un solvant léger tel que l'éthanol, l'iso-propanol, le n-propanol, le 1-butanol, le 2-butanol, le 2-methyl-2-propanol, l'acide acétique, l'acide propionique, l'acide butanoique, l'acétate d'éthyle, l'acétate de propyle, et leurs mélanges. D'une manière générale, les précurseurs sol-gel de type métallo-organique peuvent être dissous dans un solvant polaire différent de l'eau et présentant une tension de vapeur élevée supérieure ou égale à 4 millibars à 20°C, par exemple comprise entre 4 millibars et 30 millibars à 20°C.

Les précurseurs sol-gel de type métallo-organique peuvent être présents dans la première composition en une teneur massique supérieure ou égale à 3 g/L, par exemple supérieure ou égale à 14 g/L. Les précurseurs sol-gel de type métallo-organique peuvent, par exemple, être présents dans la première composition en une teneur massique par exemple comprise entre 3 g/L et 30g/L.

La première composition peut, durant l'étape a), être appliquée par tout moyen connu, par exemple par pulvérisation, en immergeant le substrat métallique dans un bain comportant la première composition ou à l'aide d'un applicateur comme une lingette, un pinceau ou une brosse. Dans un exemple de réalisation, la surface du substrat métallique n'a subi aucune étape de décapage avant l'application de la première composition. Indépendamment de la nature des précurseurs sol-gel utilisés, on peut lors de l'étape a) appliquer une masse de précurseurs sol-gel par unité de surface du substrat métallique comprise entre 0,4g/m² et 4g/m², par exemple entre O,4g/m² et 2g/m².

Une fois la première composition déposée sur le substrat métallique, on réalise un premier traitement thermique de manière à former une couche d'ancrage sur le substrat métallique (étape 20). Durant le premier traitement thermique, une première température suffisante pour éliminer tout ou partie du milieu liquide de la première composition et favoriser la liaison des précurseurs sol-gel au substrat métallique est imposée. La première température et la durée d'application de celle-ci sont choisies afin d'éviter une condensation complète des précurseurs sol-gel entre eux.

Indépendamment de la nature des précurseurs sol-gel utilisés, la première température imposée durant l'étape b) peut, par exemple, être supérieure ou égale à 80°C, par exemple être supérieure ou égale à 100°C. La première température imposée durant l'étape b) peut, par exemple, être inférieure ou égale à 180°C. La première température imposée durant l'étape b) peut, par exemple, être comprise entre 80°C et 180°C, par exemple entre 100°C et 180°C.

La durée d'application de la première température lors de l'étape b) peut, quant à elle, être inférieure ou égale à 30 minutes. Plus précisément, pour des précurseurs sol-gel de type alcoxysilane, la durée d'application de la première température lors de l'étape b) peut, par exemple, être comprise entre 2 minutes et 10 minutes. Pour des précurseurs sol-gel de type métallo-organique, la durée d'application de la première température lors de l'étape b) peut, par exemple, être comprise entre 10 minutes et 30 minutes.

Après l'étape b) et avant l'étape c), on peut refroidir la couche d'ancrage formée, en la ramenant par exemple à la température ambiante (20°C).

Après réalisation de l'étape 20, on applique sur la couche d'ancrage une deuxième composition (étape 30). La deuxième composition comporte des composés de revêtement permettant d'obtenir un revêtement sur la couche d'ancrage par formation de liaisons entre les précurseurs sol-gel et les composés de revêtement comme expliqué plus haut. Dans un exemple de réalisation, les composés de revêtement peuvent être des précurseurs sol-gel, le revêtement étant destiné à être obtenu par voie sol-gel.

Les composés de revêtement peuvent être présents dans la deuxième composition en une teneur supérieure ou égale à 0,1 mol/L, par exemple comprise entre 0,1 mol/L et 1 mol/L.

Une fois les composés de revêtement appliqués, on peut réaliser un deuxième traitement thermique à une température suffisante par exemple pour favoriser la formation de liaisons entre les précurseurs sol-gel et les composés de revêtement (étape 40). La deuxième température imposée durant le deuxième traitement thermique peut, par exemple, être supérieure ou égale à 80°C, par exemple être supérieure ou égale à 100°C. La deuxième température peut, par exemple, être comprise entre 80°C et 180°C, par exemple entre 100°C et 180°C. La deuxième température peut être imposée durant au moins 15 minutes, par exemple au moins une heure.

Le deuxième traitement thermique peut, en alternative ou en combinaison, permettre de condenser les précurseurs sol-gel entre eux et/ou de condenser les composés de revêtement entre eux, comme expliqué plus haut.

Une fois l'étape 30, et éventuellement l'étape 40, réalisée(s), on obtient un revêtement sur la couche d'ancrage par formation de liaisons entre les précurseurs sol-gel et les composés de revêtement (étape 50).

L'étape c) peut être réalisée directement après l'étape b) (i.e. sans qu'aucun autre traitement ne soit effectué entre les étapes b) et c)).

Le revêtement obtenu après l'étape c) peut constituer une couche de peinture. Le revêtement obtenu après l'étape c) peut être obtenu par voie sol-gel lorsque les composés de revêtement sont des précurseurs sol-gel.

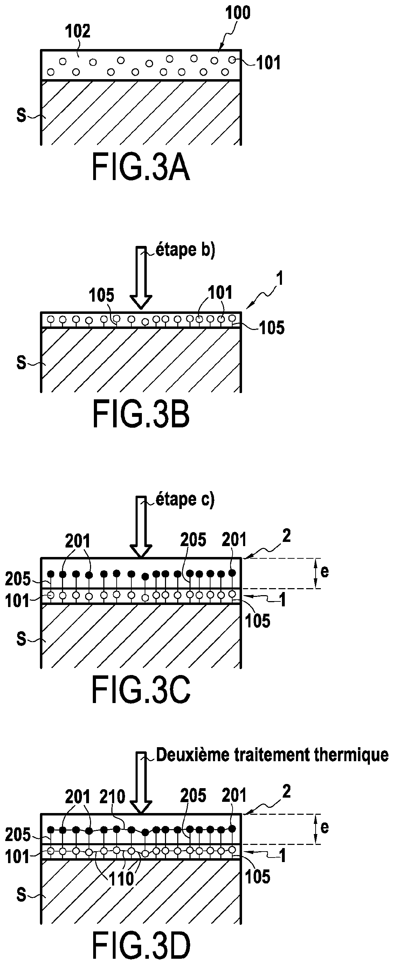

On va maintenant décrire les figures 3A à 3D qui représentent l'évolution obtenue après mise en oeuvre de différentes étapes selon l'invention. Dans ces figures, les dimensions des différentes couches n'ont pas été respectées par souci de clarté.

On a représenté à la figure 3A le résultat obtenu après mise en oeuvre de l'étape a) selon l'invention. Comme illustré, une première composition 100 sous forme de solution dans laquelle les précurseurs sol-gel 101 sont présents est appliquée sur le substrat métallique S. Ces précurseurs sol-gel 101 sont présents dans un solvant 102 lequel peut être tel que décrit plus haut. Suite à l'étape b), le solvant 102 a été éliminé par évaporation de manière à former une couche d'ancrage 1 au contact du substrat métallique. Les précurseurs sol-gel 101 présents dans la couche d'ancrage 1 ont développé une liaison 105 avec le substrat métallique S (voir figure 3B). Comme illustré à la figure 3B, les précurseurs sol-gel 101 présents dans la couche d'ancrage après mise en oeuvre de l'étape b) ne sont pas condensés entre eux (pas de liaison entre les précurseurs sol-gel 101). On ne sort pas du cadre de la présente invention s'il y a, après l'étape b), une condensation partielle des précurseurs sol-gel 101 entre eux tant que ces précurseurs 101 conservent des groupements -OH et/ou -O-Alk aptes à interagir avec les composés de revêtement de manière à former une liaison avec ces derniers.

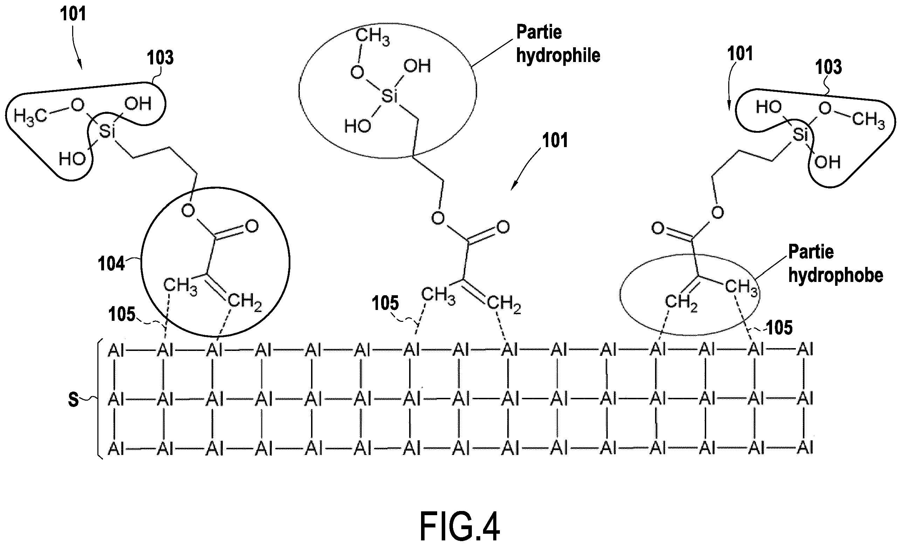

Il a été représenté à la figure 4 la fixation des précurseurs sol-gel 101 au substrat métallique S. Dans l'exemple illustré à la figure 4 lequel n'appartient pas à l'invention, le substrat métallique S est un substrat d'aluminium dont la surface a été décapée (le substrat ne présente pas de couche d'oxydation à sa surface) et les précurseurs sol-gel 101 appliqués à la surface du substrat S sont du MAPTMS. Les précurseurs sol-gel 101 forment comme illustré une liaison 105 avec le substrat S. Cette liaison 105 est réalisée par un groupement ligand 104, ici de type méthacryloxy, lequel fait partie de la fonction organique ligante des précurseurs sol-gel 101. Le groupement ligand 104 constitue une partie hydrophobe qui va avoir tendance à s'orienter du côté de la surface du substrat S laquelle constitue aussi une région hydrophobe.

Par ailleurs, les précurseurs sol-gel 101 de MAPTMS ont, dans l'exemple illustré, été appliqués sur le substrat S sous forme partiellement hydrolysée. Il est avantageux d'appliquer les précurseurs sol-gel 101 sous une forme au moins partiellement hydrolysée afin que ces derniers présentent une partie hydrophile qui va avoir tendance à s'orienter du côté opposé à la surface du substrat S. Ainsi, les groupements -OH et - OCH₃ résiduels 103 auront tendance à majoritairement s'orienter du côté opposé au substrat S, ce qui permettra d'améliorer les interactions avec les composés de revêtement appliqués ultérieurement et, par conséquent, l'adhésion du revêtement à la couche d'ancrage.

Bien entendu, les précurseurs de MAPTMS peuvent, dans un cas n'appartenant pas à l'invention, être appliqués sous forme totalement hydrolysée. Il peut encore y avoir lors de l'étape b) une condensation partielle des précurseurs sol-gel entre eux au sein de la couche d'ancrage.

Dans un deuxième temps, une deuxième composition est appliquée sur la couche d'ancrage 1. Cette deuxième composition comporte des composés de revêtement 201. Dans l'exemple illustré, les composés de revêtement 201 et les précurseurs sol-gel 101 comportent suffisamment de groupements -OH pour que des liaisons 205 se forment à température ambiante entre les précurseurs sol-gel 101 et les composés de revêtement 201 de manière à assurer l'adhérence du revêtement 2 à la couche d'ancrage 1 (voir figure 3C).

Dans un exemple de réalisation, l'épaisseur e du revêtement 2 formé lors de l'étape c) peut être supérieure ou égale à 500 nm, de préférence à 1 µm. L'épaisseur e correspond à la plus grande dimension du revêtement 2 mesurée perpendiculairement à la surface du substrat S.

On peut ensuite réaliser un deuxième traitement thermique de manière à condenser les précurseurs sol-gel 101 entre eux et les composés de revêtement 201 entre eux. Il y a alors création de liaisons 110 entre les précurseurs sol-gel 101 et création de liaisons 210 entre les composés de revêtement 201 (voir figure 3D). Un tel traitement permet avantageusement d'augmenter la dureté du revêtement 2 et éventuellement de la couche d'ancrage 1.

### Exemples

### Exemple 1 : application d'une première composition comportant des précurseurs sol-gel de type alcoxysilane (hors invention)

Dans cet exemple, on a revêtu conformément à l'invention deux types de substrats, à savoir : un substrat en acier inox poli type 304 et un substrat en aluminium poli miroir.

Avant application de la première composition, la surface du substrat métallique a tout d'abord été nettoyée. Le nettoyage peut, par exemple, se faire par dégraissage à l'acétone, rinçage à l'éthanol puis à l'eau et séchage par air comprimé ou en utilisant une solution de dégraissant commercialisée par la société Ceetal sous la dénomination Major Font NM à 5% dans l'eau en bac à ultrasons. On peut encore réaliser un lavage à l'eau dé-ionisée suivi d'un séchage par jet d'air.

Le substrat métallique est ensuite revêtu par une première composition comportant des précurseurs sol-gel MAPTMS (3-méthacryloxypropyltriméthoxysilane) en solution dans de l'iso-propanol. La teneur en précurseurs sol-gel MAPTMS dans la première composition est comprise entre 2,48 g/L et 12,4 g/L. La première composition est pulvérisée sur le substrat métallique.

Après application de la première composition sur le substrat métallique, le solvant a été évaporé par placement du substrat revêtu de la première composition dans une étuve maintenue à une température de 100°C pendant une durée comprise entre 2 minutes et 10 minutes. Le substrat a ensuite été extrait de l'étuve et ramené à la température ambiante.

Un revêtement type époxyde a alors été formé sur la couche d'ancrage obtenue.

Après formation du revêtement, le substrat revêtu a été introduit dans une étuve maintenue à une température de 150°C pendant une durée d'une heure afin d'augmenter la dureté de la couche d'ancrage et de la couche de revêtement (condensation des espèces condensables présentes dans ces couches).

On a regroupé dans le tableau 1 ci-dessous les résultats obtenus.

**Tableau 1 : résultats obtenus par application de MAPTMS**

| Echantillons | Scotch test | Dureté crayon | Epaisseur du revêtement | Rayure quadrillage | Dureté sclérometre |
|---|---|---|---|---|---|
| acier inox poli type 304 | pas arraché | pas rayé par H | 10,7 µm | Classe 1 (ISO2409) | Pas rayé par 5N |
| Aluminium poli miroir | pas arraché | Pas rayé par 2H | 12,3 µm | Classe 1 (ISO2409) | Pas rayé par 4N |

Le « scotch test » permet de déterminer l'adhérence du revêtement au substrat métallique sous-jacent. Les essais de dureté crayon, rayure quadrillage et dureté scléromètre permettent de déterminer la dureté du revêtement et de la couche d'ancrage.

Les résultats fournis dans le tableau 1 montrent que le procédé est particulièrement simple et permet d'obtenir des revêtements présentant une excellente adhérence à un substrat ainsi qu'une très bonne dureté.

### Exemple 2 : application d'une première composition comportant des précurseurs sol-gel de type alcoxysilane (hors invention)

Dans cet exemple, le substrat métallique traité est un alliage d'aluminium de la série 2000.

Avant application de la première composition, la surface du substrat métallique peut tout d'abord être nettoyée comme détaillé à l'exemple 1.

Le substrat métallique est ensuite revêtu par une première composition comportant des précurseurs sol-gel APTES ((3-aminopropyl)-triéthoxysilane) en solution dans de l'éthanol. La teneur en précurseurs sol-gel APTES dans la première composition est de 5 g/L. La solution est appliquée par pulvérisation au pistolet et l'épaisseur du film obtenu est d'environ 2 µm.

Après application de la première composition sur le substrat métallique, le solvant a été évaporé par placement du substrat revêtu de la première composition dans une étuve maintenue à une température de 120°C pendant une durée comprise entre 2 minutes et 10 minutes. Le substrat a ensuite été extrait de l'étuve et ramené à la température ambiante. Un revêtement type époxyde a alors été formé sur la couche d'ancrage obtenue.

Après formation du revêtement, le substrat revêtu a été introduit dans une étuve maintenue à une température de 120°C pendant une durée d'une heure afin d'augmenter la dureté de la couche d'ancrage et du revêtement (condensation des espèces condensables présentes dans ces couches).

On a regroupé dans le tableau 2 ci-dessous les résultats obtenus.

**Tableau 2 : résultats obtenus par application d'APTES**

| Echantillons | Scotch test | Dureté crayon | Epaisseur du revêtement | Rayure quadrillage | Dureté sclérometre |
|---|---|---|---|---|---|
| Aluminium aviation MB | pas arraché | Pas rayé par 5H | 4 µm | Classe 1 (ISO2409) | Pas rayé par 4N |

Les résultats fournis dans le tableau 2 montrent que le procédé est particulièrement simple et permet d'obtenir des revêtements présentant une excellente adhérence à un substrat ainsi qu'une très bonne dureté.

### Exemple 3 : application d'une première composition comportant des précurseurs sol-gel de type métallo-organique (appartenant à l'invention)

Dans cet exemple, on a revêtu conformément à l'invention deux types de substrats, à savoir : un substrat en acier inox poli type 304 et un substrat en aluminium poli miroir.

Avant application de la première composition, la surface du substrat métallique peut tout d'abord être nettoyée comme détaillé à l'exemple 1.

Le substrat métallique est ensuite revêtu par une solution d'acétate de fer dans de l'acide propionique en une concentration en acétate de fer de 0,05 mol.L⁻¹. L'acétate de fer formant dans cette solution du propionate de fer.

Après application de la première composition sur le substrat métallique, le solvant a été évaporé par placement du substrat revêtu de la première composition dans une étuve maintenue à une température de 150°C pendant une durée comprise entre 10 minutes et 30 minutes. Le substrat a ensuite été extrait de l'étuve et ramené à la température ambiante. Un revêtement type époxyde a alors été formé sur la couche d'ancrage obtenue.

Après formation du revêtement, le substrat revêtu a été introduit dans une étuve maintenue à une température de 150°C pendant une durée d'une heure afin d'augmenter la dureté de la couche d'ancrage et du revêtement (condensation des espèces condensables présentes dans ces couches).

On a regroupé dans le tableau 3 ci-dessous les résultats obtenus :

**Tableau 3 : résultats obtenus par application d'une solution d'acétate de fer dans de l'acide propionique**

| Echantillons | Scotch test | Du reté crayon | Epaisseur du revêtement | Rayure quadrillage | Dureté sclérometre |
|---|---|---|---|---|---|
| acier inox poli type 304 | pas arraché | pas rayé par 6H | 3,2 µm | Classe 0 (ISO2409) | Pas rayé par 4N |
| Aluminium poli miroir | pas arraché | Pas rayé par F | 4,3 µm | Classe 1 (ISO2409) | Pas rayé par 5N |

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Procédé de revêtement de la surface d'un substrat métallique (S) comportant les étapes suivantes :
a) application sur la surface d'un substrat métallique (S) d'une première composition (100) sous forme de solution comportant dans un milieu liquide (102) des précurseurs sol-gel (101) de type métallo-organique, lesdits précurseurs sol-gel (101) étant aptes à se lier avec le substrat métallique (S), les précurseurs sol-gel de type métallo-organique présentant, lorsqu'ils sont à l'état non hydrolysé et à l'état monomère, la formule générale suivante : Me(OOCR")_{n'} où :
Me est le fer,
R" est un groupement alkyle, et, lorsqu'il y a plusieurs groupements R", chaque groupement R" est un groupement alkyle et les groupements R" peuvent être identiques ou différents,
et
n' est un entier et est égal à la valence du fer,
b) soumission de la première composition à un premier traitement thermique de manière à former une couche d'ancrage (1) sur le substrat métallique (S) dans laquelle les précurseurs sol-gel (101) sont liés au substrat métallique (S), une première température supérieure ou égale à 80°C étant imposée durant le premier traitement thermique laquelle est suffisante pour éliminer tout ou partie du milieu liquide (102) et favoriser la liaison des précurseurs sol-gel (101) au substrat métallique (S), le premier traitement thermique étant configuré pour éviter une condensation complète des précurseurs sol-gel (101) entre eux,
c) application sur la couche d'ancrage (1) d'une deuxième composition comportant des composés de revêtement (201) de manière à obtenir un revêtement (2) sur la couche d'ancrage (1) par formation de liaisons (205) entre les précurseurs sol-gel (101) et les composés de revêtement (201).

2. Procédé selon la revendication 1, **caractérisé en ce que** les précurseurs sol-gel de type métallo-organique sont du propionate de fer ou du butyrate de fer.

3. Procédé selon l'une quelconque des revendications 1 ou 2, **caractérisé en ce que** les composés de revêtement sont choisis parmi les composés suivants : (methacryloxymethyl)methyldimethoxysilane, (methacryloxymethyl)methyldiethoxysilane, (methacryloxymethyl)dimethyl methoxysilane, diethylphosphatoethylmethyldiethoxysilane, 3-aminopropyltriethoxysilane, methacryloxypropyltriisopropoxysilane, m-aminophenyltrimethoxysilane, 3-(acryloxypropyl)tris(trimethylsiloxy)silane, methacryloxypropyltriethoxysilane, N-(2-aminoethyl)-3-aminopropyltrimethoxysilane, 2-(acryloxyethoxy)trimethylsilane, 3-methacryloxypropyltrimethoxysilane, acetoxypropyltrimethoxysilane, p-aminophenyltrimethoxysilane, 3-(acryloxypropyl)trimethoxysilane, diethylphosphatoethyltriethoxysilane, 3-(acryloxypropyl)trichlorosilane, 3-mercaptopropyltriethoxysilane, 3-(acryloxypropyl)methyldichlorosilane, 3-aminopropylmethyldiethoxysilane, 3-mercaptopropyltrimethoxysilane, carboxyethylsilanetriol sous forme de sel de sodium, 3-mercaptopropylmethyldimethoxysilane, 4-aminobutyltriethoxysilane, methacryloxyethoxytrimethylsilane, et leurs mélanges.

4. Procédé selon l'une quelconque des revendications 1 à 3, **caractérisé en ce que** les composés de revêtement et/ou les précurseurs sol-gel comportent, avant l'étape c), des groupements -OH.

5. Procédé selon l'une quelconque des revendications 1 à 4, **caractérisé en ce que** les précurseurs sol-gel appliqués lors de l'étape a) sont sous forme au moins partiellement hydrolysée.

6. Procédé selon l'une quelconque des revendications 1 à 5, **caractérisé en ce que** un deuxième traitement thermique est réalisé après l'application de la deuxième composition sur la couche d'ancrage.

7. Procédé selon l'une quelconque des revendications 1 à 6, **caractérisé en ce que** le substrat métallique (S) comporte de l'aluminium.

8. Procédé selon l'une quelconque des revendications 1 à 7, **caractérisé en ce que** le revêtement (2) obtenu constitue une couche de peinture ou **en ce que** le revêtement (2) est obtenu par un procédé sol-gel.

## Patentansprüche

1. Verfahren zum Beschichten der Oberfläche eines Metallsubstrats (S), umfassend die folgenden Schritte:
a) Aufbringen, auf die Oberfläche eines Metallsubstrats (S), einer ersten Zusammensetzung (100) in Form einer Lösung, die in einem flüssigen Medium (102) Sol-Gel-Vorläufer (101) vom metallorganischen Typ umfasst, wobei die Sol-Gel-Vorläufer (101) geeignet sind, sich mit dem Metallsubstrat (S) zu verbinden, wobei die Sol-Gel-Vorläufer vom metallorganischen Typ dann, wenn sie sich im nicht hydrolysierten Zustand und im monomeren Zustand befinden, die folgende allgemeine Formel aufweisen: Me(OOCR")_{n'}, worin:
Me Eisen ist,
R" eine Alkylgruppe ist und, wenn es mehrere R"-Gruppen gibt, jede R"-Gruppe eine Alkylgruppe ist und die R"-Gruppen gleich oder verschieden sein können,
und
n' eine ganze Zahl und gleich der Valenz von Eisen ist,
b) Unterziehen der ersten Zusammensetzung einer ersten Wärmebehandlung, um eine Verankerungsschicht (1) auf dem Metallsubstrat (S) zu bilden, in der die Sol-Gel-Vorläufer (101) an das Metallsubstrat (S) gebunden sind, wobei während der ersten Wärmebehandlung eine erste Temperatur von mehr als oder gleich 80 °C auferlegt wird, die ausreicht, um das gesamte flüssige Medium (102) oder einen Teil dessen zu entfernen und um die Bindung der Sol-Gel-Vorläufer (101) an das Metallsubstrat (S) zu begünstigen, wobei die erste Wärmebehandlung dazu ausgelegt ist, eine vollständige Kondensation der Sol-Gel-Vorläufer (101) untereinander zu vermeiden,
c) Aufbringen einer zweiten Zusammensetzung mit Beschichtungsverbindungen (201) auf die Verankerungsschicht (1), um auf der Verankerungsschicht (1) eine Beschichtung (2) durch Ausbilden von Bindungen (205) zwischen den Sol-Gel-Vorläufern (101) und den Beschichtungsverbindungen (201) zu erhalten.

2. Verfahren nach Anspruch 1, **dadurch gekennzeichnet, dass** die Sol-Gel-Vorläufer vom metallorganischen Typ Eisenpropionat oder Eisenbutyrat sind.

3. Verfahren nach einem der Ansprüche 1 oder 2, **dadurch gekennzeichnet, dass** die Beschichtungsverbindungen aus den folgenden Verbindungen ausgewählt werden: (Methacryloxymethyl)methyldimethoxysilan, (Methacryloxymethyl)methyldiethoxysilan, (Methacryloxymethyl)dimethylmethoxysilan, Diethylphosphatethylmethyldiethoxysilan, 3-Aminopropyltriethoxysilan, Methacryloxypropyltriisopropoxysilan, m-Aminophenyltrimethoxysilan, 3-(Acryloxypropyl)tris(trimethylsiloxy)silan, Methacryloxypropyltriethoxysilan, N-(2-Aminoethyl)-3-Aminopropyltrimethoxysilan, 2-(Acryloxyethoxy)trimethylsilan, 3-Methacryloxypropyltrimethoxysilan, Acetoxypropyltrimethoxysilan, p-Aminophenyltrimethoxysilan, 3-(Acryloxypropyl)trimethoxysilan, Diethylphosphatethyltriethoxysilan, 3-(Acryloxypropyl)trichlorsilan, 3-Mercaptopropyltriethoxysilan, 3-(Acryloxypropyl)methyldichlorsilan, 3-Aminopropylmethyldiethoxysilan, 3-Mercaptopropyltrimethoxysilan, Carboxyethylsilantriol in Form von Natriumsalz, 3-Mercaptopropylmethyldimethoxysilan, 4-Aminobutyltriethoxysilan, Methacryloxyethoxytrimethylsilan und deren Mischungen.

4. Verfahren nach einem der Ansprüche 1 bis 3, **dadurch gekennzeichnet, dass** die Beschichtungsverbindungen und/oder die Sol-Gel-Vorläufer vor Schritt c) -OH-Gruppen umfassen.

5. Verfahren nach einem der Ansprüche 1 bis 4, **dadurch gekennzeichnet, dass** die während des Schrittes a) aufgebrachten Sol-Gel-Vorläufer in wenigstens teilweise hydrolysierter Form vorliegen.

6. Verfahren nach einem der Ansprüche 1 bis 5, **dadurch gekennzeichnet, dass** nach dem Aufbringen der zweiten Zusammensetzung auf die Verankerungsschicht eine zweite Wärmebehandlung durchgeführt wird.

7. Verfahren nach einem der Ansprüche 1 bis 6, **dadurch gekennzeichnet, dass** das Metallsubstrat (S) Aluminium umfasst.

8. Verfahren nach einem der Ansprüche 1 bis 7, **dadurch gekennzeichnet, dass** die erhaltene Beschichtung (2) eine Farbschicht bildet oder dass die Beschichtung (2) durch ein Sol-Gel-Verfahren erhalten wird.

## Claims

1. A method of coating the surface of a metal substrate (S), the method comprising the following steps:
a) applying a first composition (100) on the surface of a metal substrate (S), the first composition (100) being in the form of a solution comprising a liquid medium (102) including sol-gel precursors (101) of metallo-organic type, said sol-gel precursors (101) being suitable for bonding with the metal substrate (S), the sol-gel precursors of metallo-organic type presenting, when they are in the non-hydrolyzed state and in the monomer state, the following general formula: Me(OOCR")_{n'} where:
• Me is iron;
• R" is an alkyl group, and when there are a plurality of groups R", each group R" is an alkyl group and the groups R" may be identical or different; and
• n' is an integer equal to the valence of iron;
b) subjecting the first composition to first heat treatment so as to form an anchor layer (1) on the metal substrate (S) in which the sol-gel precursors (101) are bonded to the metal substrate (S), a first temperature greater than or equal to 80°C being imposed during the first heat treatment that is sufficient to eliminate all or part of the liquid medium (102) and to encourage the bonding of the sol-gel precursors (101) to the metal substrate (S), the first heat treatment being configured to avoid complete condensation among the sol-gel precursors (101); and
c) applying a second composition on the anchor layer (1), the second composition including coating compounds (201) so as to obtain a coating (2) on the anchor layer (1) by forming bonds (205) between the sol-gel precursors (101) and the coating compounds (201).

2. A method according to claim 1, wherein the sol-gel precursors of metallo-organic type are iron propionate or iron butyrate.

3. A method according to claim 1 or 2, wherein the coating compounds are selected from the following compounds:
(methacryloxymethyl)methyldimethoxysilane;
(methacryloxymethyl)methyldiethoxysilane;
(methacryloxymethyl)dimethylmethoxysilane;
diethylphosphatoethylmethyldiethoxysilane;
3-aminopropyltriethoxysilane;
methacryloxypropyltriisopropoxysilane;
m-aminophenyltrimethoxysilane;
3-(acryloxypropyl)tris(trimethylsiloxy)silane;
methacryloxypropyltriethoxysilane;
N-(2-aminoethyl)-3-aminopropyltrimethoxysilane;
2-(acryloxyethoxy)trimethylsilane;
3-methacryloxypropyltrimethoxysilane;
acetoxypropyltrimethoxysilane;
p-aminophenyltrimethoxysilane;
3-(acryloxypropyl)trimethoxysilane;
diethylphosphatoethyltriethoxysilane;
3-(acryloxypropyl)trichlorosilane;
3-mercaptopropyltriethoxysilane;
3-(acryloxypropyl)methyldichlorosilane;
3-aminopropylmethyldiethoxysilane;
3-mercaptopropyltrimethoxysilane;
carboxyethylsilanetriol in sodium salt form;
3-mercaptopropylmethyldimethoxysilane;
4-aminobutyltriethoxysilane;
methacryloxyethoxytrimethylsilane and;
mixtures thereof.

4. A method according to any one of claims 1 to 3, wherein the coating compounds and/or the sol-gel precursors include -OH groups prior to step c).

5. A method according to any one of claims 1 to 4, wherein the sol-gel precursors applied during step a) are in at least partially hydrolyzed form.

6. A method according to any one of claims 1 to 5, wherein second heat treatment is performed after applying the second composition on the anchor layer.

7. A method according to any one of claims 1 to 6, wherein the metal substrate (S) includes aluminum.

8. A method according to any one of claims 1 to 7, wherein the coating (2) that is obtained constitutes a layer of paint, or wherein the coating (2) is obtained by a sol-gel method.
